# EUROPÄISCHE PATENTSCHRIFT

(11) **EP 2 453 337 B1**
(45) Veröffentlichungstag und Bekanntmachung des Hinweises auf die Patenterteilung: **25.05.2016**
(21) Anmeldenummer: 11007923.3
(22) Anmeldetag: 29.09.2011
(51) Int. Cl.: G06F 1/26, G06F 1/32, G03G 15/00, G07B 17/00

(54) **Ein- und ausschaltbare Versorgungseinheit**
Activatable and deactivatable supply unit
Unité d'alimentation pouvant être mise en marche et arrêtée

(30) Priorität: 11.11.2010 DE 202010015353 U
(43) Veröffentlichungstag der Anmeldung: 16.05.2012
(73) Patentinhaber: Francotyp-Postalia GmbH, 13089 Berlin (DE)
(72) Erfinder: Jauert, Joachim, 13187 Berlin (DE)

(56) Entgegenhaltungen:
- DE-A1-102004 001 296
- US-A- 5 592 034
- US-A- 5 801 724

## Beschreibung

Die Erfindung betrifft eine ein- und ausschaltbare Versorgungseinheit für ein elektronisches Gerät, insbesondere Druckergerät, gemäß der im Oberbegriff des Patentanspruchs 1 angegebenen Art. Unter einer Versorgungseinheit soll ein internes Netzteil verstanden werden, welches in Computern und anderen elektronischen Geräten eingesetzt wird und das mit einer Logikschaltung kombiniert eingesetzt wird. Die Versorgungseinheit kann zur Verringerung der Standby-Leistungsaufnahme eines solchen Gerätes automatisch und/oder manuell ausgeschaltet werden, ohne dass eine netzseitige Trennung vom Versorgungsnetz erfolgt. Sie kann zu jederzeit schnell wieder eingeschaltet werden. Unter einem Druckergerät soll u.a. eine Druckvorrichtung verstanden werden, das zum Drucken auf flache zu bedruckende Güter während des Durchlaufs der flachen Güter durch das Gerät ausgestattet ist. Die Erfindung ist für den Einsatz in Frankiermaschinen, Postfrankiersystemen u.a. druckenden Geräten bzw. Postverarbeitungssystemen geeignet.

Es ist bereits bekannt ein Gerät durch einen Netzschalter vom Versorgungsnetz zu trennen, um die Leistungsaufnahme des Gerätes zu unterbinden, wenn es nicht genutzt wird. Aus der europäischen Patentanmeldung EP 1156405 A2 ist eine Anordnung zur Erkennung der Schaltstellung eines Netzschalters bekannt. Ein Schaltnetzteil wurde mit einem speziellen Netzschalter und mit einer Logikschaltung kombiniert, welche schaltungsmäßig zwischen dem Netzschalter und einem Mikroprozessor des Gerätes angeordnet ist.

Der Netzschalter enthält zwei in Reihenschaltung geschaltete Schalter, welche nur gemeinsam geöffnet oder geschlossen werden können, wobei der eine Schalter mit seinem einen Kontakt an einem der beiden spannungsführenden oder Null-Leiter und mit seinem anderen Kontakt mit einem ersten Eingang eines Sensors verbunden ist, der ausgangsseitig ein Ausgangssignal entsprechend der Schaltstellung des Netzschalters an einen Mikroprozessor des Gerätes übermittelt. Mittels einem weiteren parallel zum Netzschalter liegenden und durch den Mikroprozessor gesteuerten Schalter wird eine Ausschaltverzögerung erzielt, ohne dass die Abfrage der Schaltstellung des Netzschalters dadurch beeinträchtigt wird. In Druckergeräten werden heute Tintenstrahldruckköpfe eingesetzt. Damit die Tintenstrahldruckköpfe nicht eintrocknen können, wenn nicht gedruckt wird oder wenn das Gerät ausgeschaltet wird, müssen diese in eine Dichtposition verfahren werden. Um sicherzustellen, dass nach dem Betätigen des Netzschalters die Druckköpfe noch in die Dichtposition verfahren werden können, übermittelt der Mikroprozessor zur Ansteuerung des vorgenannten weiteren Schalter ein Ausschaltverzögerungssignal.

Weiterhin ist als Stand der Technik Anmeldung US 5801724 bekannt, in der ein Schaltkreis zur Vorbeugung der Verstopfung der Druckköpfe eines Druckers offenbart wird.

Im Amtsblatt der Europäischen Union vom 28.12.2006 L381/90 wurden unter Kapitel VIII. SPEZIFIKATIONEN FÜR COMPUTER - ÜBERARBEITETE FASSUNG FÜR 2007 bereits Anforderungen an interne Netzteile und Energystar-Anforderungen an die Standbby-Leistungsaufnahme veröffentlicht, welche ab dem 20. Juli 2007 gelten. Die Geräte müssen ENERGY STAR-gerecht sein oder die Effizienzwerte für Nulllast- und Aktivmodus erreichen, die in den Anforderungen des ENERGY STAR-Programms für Einzelspannungs-Wechselstrom/Wechselstrom-Netzteile und externe Wechselstrom/Gleichstrom-Netzteile vorgegeben sind. Unter einem internen Netzteil wird demnach eine Komponente verstanden, die (beispielsweise) im Computergehäuse untergebracht ist und dazu dient, die Wechselstrom-Netzspannung in Gleichstromspannung(en) für die Stromversorgung der Komponenten des Computers umzuwandeln. Im Sinne dieser Spezifikation muss ein internes Netzteil innerhalb des Computergehäuses, aber getrennt von der Hauptplatine des Computers angebracht sein. Das Netzteil muss über ein einzelnes Kabel ohne Zwischenschaltkreise zwischen dem Netzteil und dem Stromnetz mit dem Netz verbunden sein. Ferner müssen alle Stromanschlüsse vom Netzteil zu den Komponenten des Computers innerhalb des Computergehäuses untergebracht sein (d.h. es darf keine externen Kabel vom Netzteil zum Computer oder zu einzelnen Komponenten des Computers geben). Interne Gleichstrom/Gleichstrom-Wandler, die zur Umwandlung einer einzelnen Gleichstromspannung eines externen Netzteils in Mehrfachspannungen für den Computer dienen, gelten nicht als interne Netzteile.

Interne Netzteile müssen folgende Modi aufweisen:
- Ruhemodus:
   Ein Niedrigverbrauchsmodus, in den der Computer nach einer bestimmten Inaktivitätszeit automatisch übergehen oder manuell versetzt werden kann. Ein Computer mit Ruhemodusfunktion kann schnell durch Netzverbindungen oder Benutzerschnittstellengeräte "geweckt" werden.
- Standby-Modus:
   (Aus-)Zustand mit der geringsten, vom Nutzer nicht ausschaltbaren (beeinflussbaren) Leistungsaufnahme, der unbegrenzt fortbesteht, solange das Gerät mit dem Stromnetz verbunden ist und entsprechend der Bedienungsanleitung des Herstellers genutzt wird.

Seit dem 1.Januar 2009 gelten Anforderungen der Stufe 2 für die Stromsparfunktionen. Zusätzlich zu den Anforderungen nach Stufe 1 muss bei ENERGY STAR-gerechten Computern die vollständige Netzanbindung im Ruhemodus gemäß einem plattformunabhängigen Industriestandard aufrecht erhalten bleiben. Alle Computer müssen bei niedrigem Datenverkehr ihre Netzübertragungsgeschwindigkeiten gemäß etwaigen Industriestandards, die schnelle Übergänge zwischen Übertragungsgeschwindigkeiten vorsehen, reduzieren.

Zusätzlich zur Stromsparfunktion ist ein Weck-Ereignis vorgesehen, d.h. solche vom Benutzer ausgelöste, programmierte oder externe Ereignisse oder Impulse, die bewirken, dass der Computer von seinem Ruhe- oder Standby-Modus in seinen aktiven Betriebsmodus übergeht. Solche Weck-Ereignisse sind unter anderem Mausbewegungen, Tastatureingaben oder die Bedienung einer Taste am Gehäuse und im Fall externer Ereignisse Impulse, die per Fernbedienung, Netz, Modem usw. übertragen werden.

Die Aufgabe besteht darin, eine technische Lösung für ein elektronisches Gerät, insbesondere Druckergerät zu finden, welche ohne Verwendung eines Netzschalters sicherstellt, dass die Energystar-Anforderungen an die Standbby-Leistungsaufnahme durch die Frankiermaschine eingehalten werden und dass dennoch die Tintendruckköpfe in die Dichtposition verfahren werden können, wenn in den Standby-Modus bzw. in einen Modus umgeschaltet wird, in welchem nicht gedruckt wird sowie dass alle Eingaben in das Gerät auf eine einfache Weise und mit wenig Aufwand ermöglicht werden.

Die Aufgabe wird mit den Merkmalen einer ein- und ausschaltbaren Versorgungseinheit für ein elektronisches Gerät, insbesondere Druckergerät, gemäß des Patentanspruchs 1 gelöst.

Im Gerät kommt ein Standardnetzteil zum Einsatz, das für sich die Energystar-Anforderungen an die Standbby-Leistungsaufnahme erfüllt und damit ständig eingeschaltet am Versorgungsnetz hängen kann. Durch die Ausgangsspannung, beispielsweise eines Schaltnetzteils und aus den daraus abgeleiteten Spannungen werden eine Vielzahl von Funktionseinheiten des Gerätes versorgt. Als Versorgungseinheit sind ein erster Spannungsregler und eine Spannungsquelle vorgesehen, welche auf einem Mainbord des Gerätes angeordnet und eingangsseitig mit dem Gleichspannungsausgang des Schaltnetzteils verbunden sind. Die Versorgungseinheit weist weiterhin einen Logikbaustein auf, welcher durch die Spannungsquelle, mit einer geeigneten Hilfsgleichspannung versorgt wird, die aus der Ausgangsgleichspannung des Schaltnetzteils in bekannter Weise abgeleitet wird. Der erste Spannungsregler kann über den Logikbaustein gesteuert ein- bzw. ausgeschaltet werden, wobei an dem Logikbausteins ein Schaltkontaktpaar angeschlossen ist, deren Kontakte zum Bewirken eines Umschaltens des Logikbausteins elektrisch miteinander verbunden werden, um über den Logikbaustein ein Umschalten eines ersten Zustandes in einen zweiten Zustand des elektronischen Geräts herbeizuführen. Ein erster Kontakt des Schaltkontaktpaars ist an der Hilfsgleichspannung angeschlossen und ein zweiter Kontakt des Schaltkontaktpaars ist einerseits an einem ersten Eingang des Logikbausteins und andererseits an einem Steuereingang eines Mikrorechners einer Steuereinheit angeschlossen. Der Mikrorechner ist im Betriebmodus durch ein in einem Programmspeicher gespeichertes Programm programmiert, um die Anzahl und Dauer des Verbindens des Schaltkontaktpaars festzustellen und auszuwerten. Im Ergebnis wird eine Benutzer-Eingabe in das Gerät oder eine Umschaltung zwischen Zuständen des Geräts vorgenommen, wobei in Abhängigkeit von der Auswertung im Mikrorechner ein digitales Signal an einem Steuerausgang zur Umschaltung vom Betriebsmodus in einen Standbymodus abgegeben wird. Am Steuerausgang ist ein zweiter Eingang des Logikbausteins angeschlossen.

Als Logikbaustein kann ein sogenanntes Flip-Flop eingesetzt werden. Unter einem Flip-Flop wird im Fachgebiet der Elektronik ein elektronisches Bauelement der bistabilen Kippstufe und seinem Logikprinzip verstanden. Ein Flip-Flop kann zwei stabile Zustände Eins oder Null einnehmen und diese speichern. Eine Datenmenge von einem Bit kann damit über eine lange Zeit gespeichert werden. Das Flip-Flop weist Negatoren mit einer speziellen Beschaltung am ersten Eingang zum Setzen und am zweiten Eingang des Logikbausteins zum Rücksetzen des Flip-Flops auf. Es ist vorgesehen, dass der Logikbaustein eine Anzahl an Negatoren aufweist, wobei der Eingang eines ersten Negators den ersten Eingang des Logikbausteins bildet, wobei ein zweiter Negator und ein dritter Negator zu einem Flip-Flop verschaltet sind, wobei der Eingang des zweiten Negators einerseits mit dem Ausgang des ersten Negators und anderseits über eine Reihenschaltung einer Diode und eines ohmschen Widerstandes mit dem zweiten Eingang des Logikbausteins verbunden ist, wobei der erste Negator aus einem ersten Transistor besteht, dessen Emitter an Masse angeschlossen ist, und dass ein ohmscher Widerstandes zwischen dem Kollektor ersten Transistors und dem Ausgang des dritten Negators geschaltet ist.

Das Schaltkontaktpaar ist Bestandteil eines Einschalters, der zum Umschalten des elektronischen Geräts zwischen einem ersten und zweiten Zustand, mindestens von einem Standbymodus in einen Betriebsmodus und umgekehrt betätigt werden kann. Unter einem Einschalter wird ein Schalter mit zwei Anschlüssen verstanden, der nur einen Stromkreis öffnet oder schließt. Ein Schalter bewirkt das Ein- und Ausschalten eines Stromes als Folge seiner Betätigung.

Die vorgeschlagene Schaltungsanordnung ermöglicht im Ergebnis der Betätigung eine Eingabe von Informationen, wobei die Eingabe von Informationen aufgrund einer Benutzer-Eingabe in ein elektronisches Gerät vorgenommen wird, da das Gerät einen Mikrorechner aufweist, der jede Betätigung der Taste feststellen kann, während sich das elektronische Gerät im Betriebsmodus befindet.

Die beiden Kontakte des Schaltkontaktpaars können miteinander elektrisch verbunden werden, um das elektronische Gerät über den Logikbaustein und unabhängig von einem im Programmspeicher gespeicherten Programm von einem Standbymodus in einen Betriebsmodus umzuschalten, um das elektronische Gerät, welches im Betriebsmodus durch das im Programmspeicher gespeicherte Programm gesteuert wird, von einem Zustand in einen anderen Zustand umzuschalten, wobei durch das Verbinden der vorgenannten beiden Kontakte des Einschalters eine Eingabe im Betriebsmodus vorgenommen wird, wenn die Zeitdauer der Betätigung des Einschalters eine vorbestimmte erste Zeitdauer erreicht und eine zweite Zeitdauer unterschreitet und/oder wobei das elektronische Gerät von einem Betriebsmodus in einen Standbymodus umgeschaltet wird, wenn die Zeitdauer der Betätigung eine vorbestimmte zweite Zeitdauer erreicht oder übersteigt.

Bei positiver Logik entspricht einem High-Pegel (H-Pegel) ein Signal mit dem digitalen Wert von "Eins" und einem Low-Pegel (L-Pegel) entspricht ein Signal mit dem digitalen Wert von "Null".

Vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Figur 1,: Schaltungsanordnung zur Energieversorgung eines elektronischen Geräts,
- Figur 2,: Schaltungsanordnung einer ein- und ausschaltbaren Versorgungseinheit eines elektronischen Geräts,
- Figur 3,: Wahrheitstabelle eines RS-Flip-Flops,
- Figur 4,: Schaltungsanordnung eines RS-Flip-Flops mit n-Kanal-MOSFET's,
- Figur 5,: Schaltungsanordnung der Steuereinheit eines Druckergeräts.

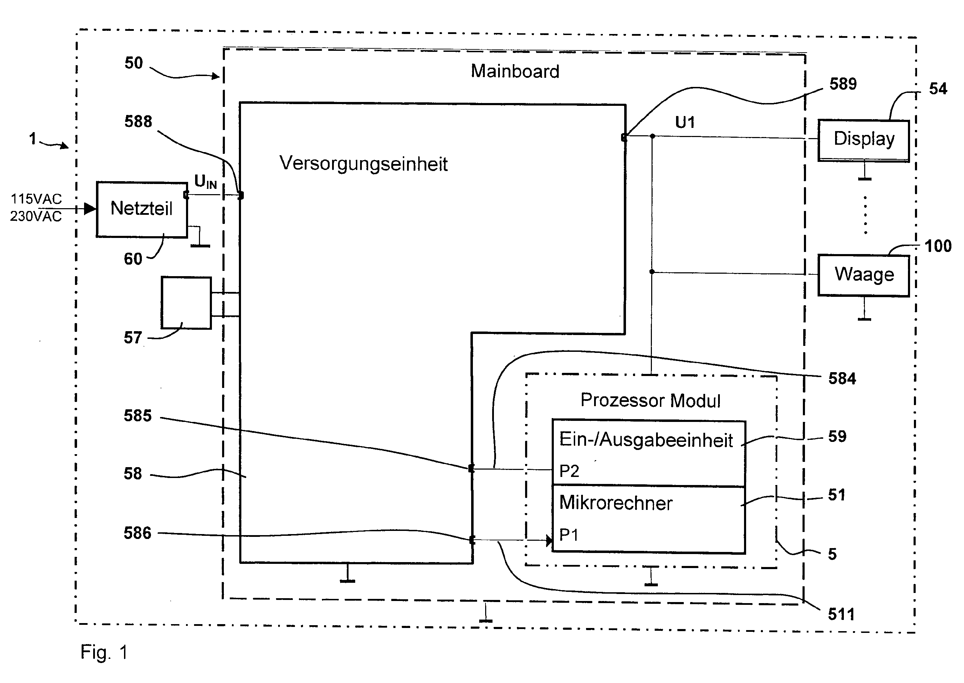

In der Figur 1 wird die Schaltungsanordnung zur Energieversorgung eines elektronischen Geräts 1 dargestellt, das ein internes Schaltnetzteil 60 aufweist. Das Schaltnetzteil 60 ist eingangsseitig mit dem Stromversorgungsnetz verbunden, welches eine Wechselspannung von 115 V_{AV} oder 230 V_{AC} aufweist. Die Ausgangsgleichspannung des Schaltnetzteils 60 beträgt U_{IN} = 24 V_{DC}. Das Schaltnetzteil 60 ist ausgangsseitig mit dem Versorgungseingang 588 einer Versorgungseinheit 58 eines elektronischen Geräts 1 (Strich/Punkt-Linie) verbunden. Ein Prozessormodul 5 (Strich/Doppelpunkt-Linie) und die Versorgungseinheit 58 sind gemeinsam auf einem Mainboard angeordnet und bilden eine Steuereinheit 50 (gestrichelte Linie). Die Steuereinheit 50 weist einen Mikrorechner 51, eine Ein-/Ausgabeeinheit 59 und weitere elektronische Baugruppen auf. Die Versorgungseinheit 58 liefert am Versorgungsausgang 589 eine erste Ausgangsgleichspannung U1 und Gleichstrom bis zur einem vorbestimmten Grenzwert. Dadurch und durch gegebenenfalls daraus abgeleitete Spannungen werden eine Vielzahl von Funktionseinheiten des elektronischen Geräts 1 versorgt, wie beispielweise das Prozessormodul, ein Display 54 oder die Elektronik einer Waage 100. Das Display und ein zugehöriger - nicht gezeigter - Controller können separat vom Mainboard im Gerät 1 angeordnet sein. Ein Steuerungsausgang P2 der Ein-/Ausgabeeinheit 59 ist über eine Steuerleitung 584 mit einen Steuereingang 585 der Versorgungseinheit 58 verbunden. Am Steuerungsausgang P2 kann ein Ausschaltsignal abgegeben werden. Durch das Ausschalten eines ersten Span-nungsreglers der Versorgungseinheit 58 wird die Standby-Leistungsaufnahme des elektronischen Geräts so weit verringert, daß die Energystar-Anforderungen erfüllt werden. Ein Steuerausgang 586 der Versorgungseinheit 58 ist über eine Steuerleitung 511 mit einen Eingang P1 des Mikrorechners 51 verbunden. Ein Einschalter 57 ist mit der Versorgungseinheit 58 verbunden. Ein Einschalter 57 kann als Taster, beispielsweise vom Typ MPI002/28/BL der Firma Bulgin oder als handelsüblicher Mikroschalter ausgeführt werden.

Die Ein-/Ausgabeeinheit 59 wird vorzugsweise mit einem separaten Baustein realisiert. Es kann vorzugsweise eine programmierbaren Logik, wie beispielsweise Spartan-II 3A FPGA der Firma XILINX (www.xilinx.com) oder eine anwendungsspezifischen Schaltung (ASIC) zur Anwendung kommen.

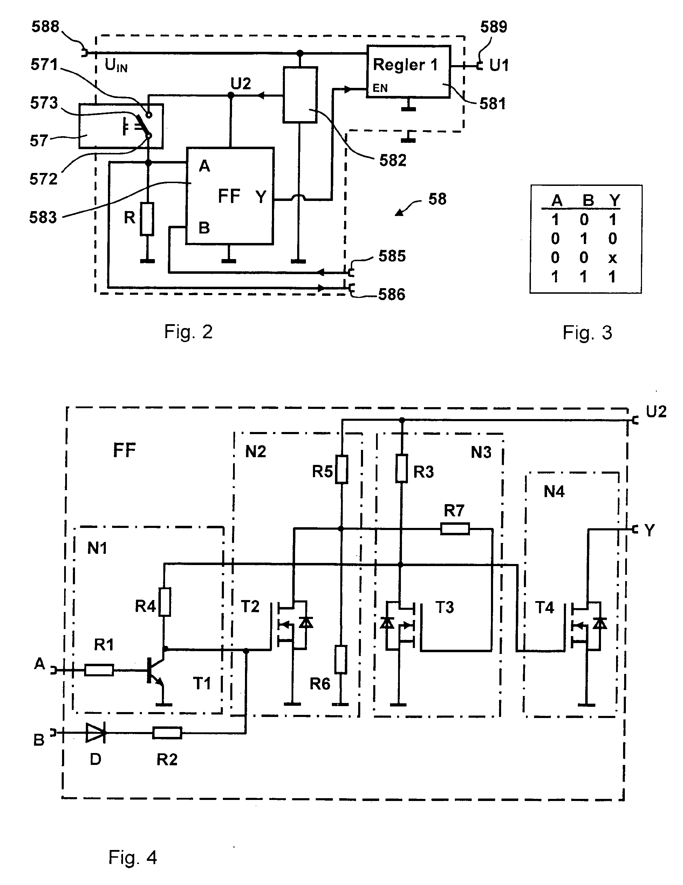

In der Figur 2 wird die Schaltungsanordnung einer ein- und ausschaltbaren Versorgungseinheit 58 eines elektronischen Geräts dargestellt. Die Ausgangsgleichspannung des Schaltnetzteils beträgt U_{IN} = 24V_{DC}. Diese liegt am Eingang 588 an und versorgt u. a. einen ersten schaltbaren Spannungsregler 581, der eine Ausgangsgleichspannung U1 = 5 V_{DC} als Versorgungsspannung des Geräts erzeugt und am Ausgang 589 abgibt. Es ist vorgesehen, dass der erste Spannungsregler einen Enable-Eingang EN hat, der mit dem Ausgang Y eines Logikbausteins 583 verbunden ist und über letzteren gesteuert ein- bzw. ausgeschaltet werden kann. Als Logikbaustein wird beispielsweise ein ungetaktetes zustandsgesteuertes RS-Flip-Flop eingesetzt, welches die zwei Eingänge A und B aufweist. Dessen Funktion besteht darin, kurze Aus- oder Einschaltsignale über eine lange Zeit zu speichern.

Als Spannungsquelle für die zum Betreiben des Flip-Flops 583 erforderliche Hilfsgleichspannung dient ein zweiter Spannungsregler 582, der eine zweite Ausgangsgleichspannung U2 = 5 V_{DC} erzeugt. Der Spannungsregler 582 ist beispielsweise ein Linearregler und der erste Spannungsregler 581 arbeitet als Gleichspannung/Gleichspannung-Wandler (DC/DC-Wandler).
Der Mikrorechners ist programmiert, die Druckköpfe in die Dichtposition zu verfahren und anschließend ein Ausschaltsignal abzugeben, um das Flip-Flop 583 in den Zustand Y = 0 zu setzen, damit der erste Spannungsregler 581 ausgeschaltet wird. Das Ausschaltsignal liegt an einem Steuereingang 585 an. Durch das am zweiten Eingang B des FF's angelegte Ausschaltsignal mit einem Logikpegel von "Eins", d.h. bei B = 1 wird das FF 583 in einen Zustand mit dem ausgangsseitigen Logikpegel Y = 0 gesetzt, was den ersten Spannungsregler 581 ausschaltet.

Der Einschalter 57 hat ein Kontaktpaar. Dessen Kontakte 571 und 572 werden durch ein Kontaktstück 573 elektrisch miteinander verbunden, um das Flip-Flop und letztendlich das elektronische Gerät von einem abgeschalteten Zustand in einen eingeschalteten Zustand umzuschalten. Das Kontaktstück ist Bestandteil des Einschalters und wird manuell durch eine Taste an das Kontaktpaar herangedrückt. Der erste Kontakt 571 ist mit der zweiten Ausgangsgleichspannung und der zweite Kontakt 572 ist über einen Widerstand R mit Masse verbunden. Durch das Flip-Flop (FF) 583 kann der erste Spannungsregler 581 ein- bzw. ausgeschaltet werden. Durch einen Einschalter 57, der beispielsweise über eine spezielle Taste betätigbar ist, wird an den Eingang A des FF's 583 ein Logikpegel von "Eins" gelegt, d.h. A = 1. Das FF wird dadurch in einen Zustand mit dem ausgangsseitigen Logikpegel von "Eins", d.h. Y = 1 gesetzt, welcher den ersten Spannungsregler 581 einschaltet. Der Pegel liegt auch via dem Steuerausgang 586 Versorgungseinheit 58 an dem einen Eingang des Mikrorechners an und wird von dem letzteren erkannt.

In der Figur 3 wird die Wahrheitstabelle des RS-Flip-Flops dargestellt. Ein Logikpegel von "Null" gleichzeitig am Eingang A und B des Flip-Flops ergibt keine Logikpegeländerung am Ausgang Y des Flip-Flops. Der Logikpegel von "Eins" am Eingang A versetzt das Flip-Flop in den Zustand "gesetzt". Der Ausgang Y des Flip-Flops ist auf den Logikpegel von "Eins", also Y = 1 gesetzt. Der Logikpegel von "Eins" am Eingang B versetzt das Flip-Flop in den Zustand "zurückgesetzt" unter der Voraussetzung, dass gleichzeitig ein Logikpegel von "Null" am Eingang A des Flip-Flops anliegt. Der Ausgang Y des Flip-Flops ist auf den Logikpegel von "Null", also Y = 0 gesetzt. Im Fall A = 1, B = 1 ergibt sich Y = 1. Der Ausdruck Y = X bedeutet, dass das Ausgangssignal unverändert bleibt. Als Flip-Flop-Schaltung (FF) eignet sich ein Baustein oder eine entsprechende Schaltung aus Transistoren.

Die Figur 4 zeigt eine Schaltungsanordnung eines RS-Flip-Flops mit n-Kanal-MOSFET's des Anreicherungstyps. Zwei MOSFET's (Metal Oxid Semiconductor Field-Effect Transistor) T2 und T3 sind als Flip-Flop (FF) verschaltet, d.h. der Gate-Anschluss des jeweils einen MOSFE-Transistors T2 (oder T3) steht mit dem Drain-Anschluss des jeweils anderen MOSFE-Transistors T3 (oder T2) in Verbindung. Der Source-Anschluss aller MOSFET's ist mit Massepotential verbunden. Der erste Eingang A des RS-Flip-Flops führt über einen ohmschen Widerstand R1 auf den Basis-Anschluss eines ersten npn-Transistors T1, dessen Emitter-Anschluss mit Massepotential und dessen Kollektor-Anschluss mit dem der Gate-Anschluss des zweiten MOSFE-Transistors T2 direkt verbunden ist. Der Gate-Anschluss ist ebenfalls mit dem zweiten Eingang B des FF's über eine Reihenschaltung verbunden, wobei die Reihenschaltung aus einem ohmschen Widerstand R2 und einer Diode D besteht, wobei die Diode einen p/n-Übergang aufweist und so geschaltet ist, dass deren p-Gebiet in Richtung des zweiten Eingangs B weist. Der Kollektor-Anschluss des ersten npn-Transistors T1 ist über einen ohmschen Widerstand R4 mit dem Drain-Anschluss eines dritten MOSFE-Transistors T3 verbunden. Ein ohmscher Widerstand R3, der zwischen dem Drain-Anschluss des dritten MOSFE-Transistors T3 und der Hilfsspannung U2 geschaltet ist, versorgt das Gate des zweiten MOSFE-Transistors T2 mit einer Steuerspannung, die letzteren leitend schaltet, sobald die Hilfsspannung U2 bereitgestellt wird, aber noch kein High-Pegel an den Eingängen A und B des FF's anliegt. Ein ohmscher Widerstand R5 ist zwischen dem Drain-Anschluss des zweiten MOSFE-Transistors T2 und der Hilfsspannung U2 sowie ein ohmscher Widerstand R6 ist zwischen dem Drain-Anschluss des zweiten MOSFE-Transistors T2 und Massepotential geschaltet. Die beiden Widerstände R5 und R6 sind als Spannungsteiler geschaltet, der den Pegel der Hilfsspannung U2 am Mittelabgriff beispielsweise halbiert. Der erste npn-Transistor T1 arbeitet mit seinem Kollektorwiderstand R4 zusammen dann als ein erster Negator N1, wenn der dritte MOSFE-Transistor T3 nichtleitend geschaltet, d.h. gesperrt ist. Der Negator N1 negiert den digitalen Wert eines Spannungspegels eines Signals, welches am ersten Eingang A anliegt. Bei positiver Logik hat ein High-Pegel den digitalen Wert 1. Liegt ein solcher High-Pegel am ersten Eingang A an, dann gibt der Ausgang des Negator einen Low-Pegel ab und dessen digitaler Wert ist dann Null. Als Null gelten dabei Low-Pegel, wie beispielsweise 0 bis 0,7 V. Da der Kollektor-Anschluss des ersten npn-Transistors T1 ebenfalls mit dem zweiten Eingang B des FF's über einen ohmschen Widerstand R2 und eine Diode D verbunden ist, arbeiten beide, also der erste npn-Transistor T1 und die Diode D, auf einen gemeinsamen ohmschen Widerstand R4 und realisieren somit eine logische wired OR-Verknüpfung. Der letzteren wird das Signal am ersten Eingang A negiert und das Signal am zweiten Eingang B nicht negiert zugeführt. Am Mittelabgriff des Spannungsteilers R5, R6 liegt der Drain-Anschluss des zweiten MOSFE-Transistors T2, mit welchem über einen ohmschen Widerstand R7 ein Gate-Anschluss des dritten MOSFE-Transistors T3 verbunden ist. Der Gate-Anschluss eines vierten MOSFE-Transistors T4 ist mit dem Drain-Anschluss des dritten MOSFE-Transistors T3 verbunden. Am Drain-Anschluss des vierten MOSFE-Transistors T4 wird ein Ausgangssignal abgegeben, wobei ein Innenwiderstand einer nachfolgend geschalteten Schaltung des ersten Reglers 581 als Kollektorwiderstand fungiert. Somit arbeiten alle vorgenannten MOSFE-Transistoren als Negatoren N2, N3 bzw. N4, wobei der Ausgang des vierten Negators N4 den Ausgang des Logikbausteins 583 bildet. Alle ohmschen Widerstände haben den gleichen Wert wie R1, außer der ohmschen Widerstand R2, wobei gilt: R2 < R1. Bei einem digitalen Wert Null am zweiten Eingang B (B = 0) und Null am ersten Eingang (A = 0) sowie bei einem digitalen Wert B = 0 und A = 1 ist die Diode D gesperrt. Aber bei einem digitalen Wert B = 1 und A = 1 wird die Diode D leitend. Der ohmsche Widerstand R2 dient dann zur Strombegrenzung. Bei einem digitalen Wert B = 0 und A = 1 ist der erste npn-Transistor T1 leitend, der zweite MOSFE-Transistors T2 gesperrt und die Spannung am Mittelabgriff des Spannungsteilers R5, R6 steigt auf ca. 1/2·U2 und folglich ist der dritte MOSFE-Transistor T3 leitend und somit liegt am nachgeschalteten Gate-Anschluss des vierten MOSFE-Transistors T4 ein Low-Spannungpotential, welche die Schaltschwelle des vierten MOSFE-Transistors T4 nicht übersteigt. Somit liegt am Ausgang Y ein High-Pegel, d.h. der digitale Wert 1. An diesem Zustand ändert auch ein Wechseln des Signalpegels an A auf einen digitalen Wert A = 0 bei Beibehaltung von B = 0 nichts, weil der dritte MOSFE-Transistor T3 leitend geschaltet ist, was verhindert das über den ohmschen Widerstand R4 ein High-Pegel anliegt, der zum Gate-Anschluss des zweiten MOSFE-Transistors T2 gelangen könnte. Folglich bleibt der zweite MOSFE-Transistor T2 weiter gesperrt, die Spannung am Mittelabgriff des Spannungsteilers R5, R6 beträgt 1/2·U2 und am Ausgang Y liegt weiterhin der digitale Wert 1 an. Bei einem Wechsel des Signals auf einen digitalen Wert B = 1 bei Beibehaltung von A = 0 liegt ein High-Pegel am Gate-Anschluss des zweiten MOSFE-Transistors T2 und letzterer wird leitend geschaltet. Die Spannung am Mittelabgriff des Spannungsteilers R5, R6 sinkt unter einen Schwellwert, welcher die Schaltschwelle des dritten MOSFE-Transistors T3 nicht übersteigt. Folglich ist der dritte MOSFE-Transistor T3 gesperrt und der vierte MOSFE-Transistor T4 leitend und der Ausgang Y gibt einen Low-Pegel ab, d.h. der digitale Wert ist Null (Y = 0). Da der dritte MOSFE-Transistor T3 gesperrt ist, liegt über den ohmschen Widerstand R3 selbst bei einem Wechsel des Signals am zweiten Eingang B auf einen digitalen Wert Null (B = 0) und bei Beibehaltung des Signals am ersten Eingang A mit dem digitalen Wert Null (A = 0) weiterhin ein High-Pegel am Gate-Anschluss des zweiten MOSFE-Transistors T2. Folglich ist der zweite MOSFE-Transistor T2 leitend, der dritte MOSFE-Transistor T3 gesperrt und der vierte MOSFE-Transistor T4 leitend und der Ausgang Y gibt einen Low-Pegel ab, d.h. der digitale Wert ist Null (Y = 0). Bei einem digitalen Signal von Eins an beiden Eingängen A und B ist der erste npn-Transistor T1 leitend und am Gate-Anschluss des zweiten MOSFE-Transistors T2 liegt ein Low-Pegel an. Folglich ist der zweite MOSFE-Transistor T2 gesperrt, der dritte MOSFE-Transistor T3 leitend und der vierte MOSFE-Transistor T4 gesperrt und am Ausgang Y erscheint ein High-Pegel, d.h. der digitale Wert ist Eins (Y = 1).

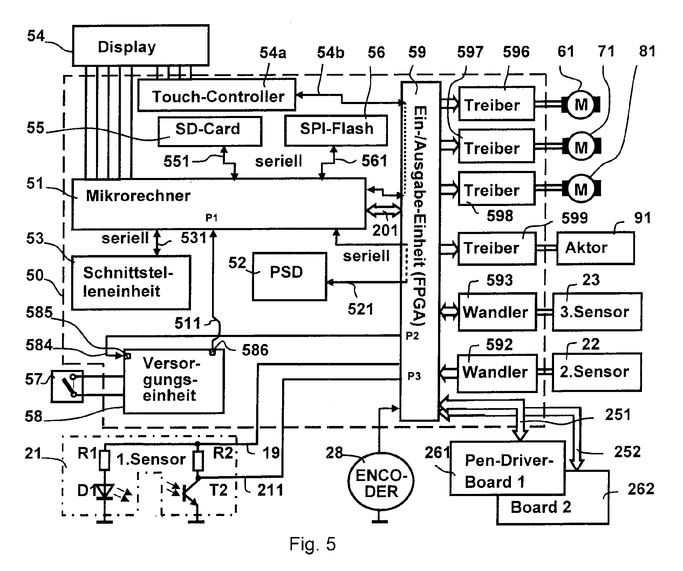

Die Figur 5 zeigt eine Schaltungsanordnung der Steuereinheit eines Druckergeräts. Die elektronische Steuereinheit 50 enthält ein Sicherheitsmodul 52 und einen nichtflüchtigen Speicher 56, welche betriebsmäßig mit einem Mikrorechner 51 der elektronischen Steuereinheit 50 verbunden sind, wobei der Mikrorechner 51 außerdem mit einer Ein-/Ausgabeeinheit 59 über einen internen Bus 201 verbunden ist, an welche die Eingabemittel (Sensoren) angeschlossen sind und welche die ebenfalls angeschlossenen Ausgabemittel (Treiber, Aktoren, ... u.a.) ansteuert. Als Sicherheitsmodul 52 eignet sich beispielsweise ein Postal Security Device (PSD). Als nichtflüchtiger Speicher 56 für ein Bootprogramm wird ein SPI-FLASH und eine SD-Card 55 wird als Programmspeicher eingesetzt. Beide sind mit dem Mikrorechner 51 jeweils über serielle Datenleitungen 561, 551 verbunden. Die SD-Card 55 enthält außerdem unterschiedliche Klischeedaten für Frankierabdrucke. Auch ist ein - nicht gezeigtes - weiteres NVRAM für Daten am Mikrorechner 51 angeschlossen.

Das PSD 52, die SD-Card 55 und das SPI-Flash 56 sind mit dem Mikrorechner beispielsweise direkt oder indirekt über serielle Datenleitungen betriebsmäßig verbunden. Die serielle Datenleitung 521 zum PSD 52 wird beispielsweise durch die Ein-/Ausgabeeinheit 59 hindurch geschleift. Die Ein-/Ausgabeeinheit 59 steuert mindestens Daten- und Steuerleitungen 251, 252 zu weiteren Baueinheiten (Pen-Driver-Boards) 261, 262 des druckenden Geräts. Ein Encoder 28 ist an der Ein/Ausgabeeinheit 59 angeschlossen. Als Ein/Ausgabeeinheit 59 eignet sich ein frei programmierbares Gate Array (FPGA).

Die Steuereinheit 50 ist zur Umschaltung in den Standbymodus und/oder zu einer Eingabe von Informationen durch den Benutzer des Geräts aufgrund einer entsprechenden Benutzereingabe via einer Taste am Einschalter 57 programmiert. Zur Eingabe von Informationen durch den Benutzer wird mindestens ein über eine vorbestimmte erste Zeitdauer ausgeübter Tastendruck verwendet, während zur Umschaltung in den Standbymodus ein über eine vorbestimmte zweite Zeitdauer ausgeübter Tastendruck verwendet wird, wobei die erste Zeitdauer kürzer ist, als die zweite Zeitdauer.

Alternativ kann ein anderes geeignetes - nicht gezeigtes - Betätigungsmittel oder ein Betätigungsfeld des Userinterfaces zur Umschaltung in den Standbymodus verwendet werden. Hierzu kann ein separates Betätigungsmittel oder eine Tastatur oder ein Touchscreen verwendet werden, ohne dass die Länge der Zeitdauer eine Rolle spielt.

Zusätzlich oder alternativ kann die Steuereinheit 50 zur Umschaltung in den Standbymodus durch Zeitablauf programmiert sein. Bei Programmierung aufgrund Zeitablauf, schaltet der Mikrorechner nach einer bestimmten Inaktivitätszeit automatisch in den Standbymodus, wobei unter Inaktivitätszeit ein Zeitdauer verstanden wird, in welcher der Benutzer weder Eingaben vornimmt noch in der das Gerät benutzt wird. Auch ohne ein Tastendrücken wird dann an einem Pin P2 ein einsprechendes High-Signal zeitverzögert bereitgestellt, um das Druckergerät in den Standbymodus umzuschalten.

Eine Versorgungseinheit 58, die die gesamte Elektronik des Geräts mit Energie versorgt, weist einen Steuereingang 585 zum Umschalten der Stromversorgung in den Standbymodus auf. Der Mikrorechner 51 ist zu diesem Zweck über die Ein-/Ausgabeeinheit 59 und eine Leitung 584 mit dem Steuereingang 585 verbunden. Auch bei einem Tastendrücken wird an einem Pin P2 ein entsprechendes High-Signal bereitgestellt, um das Druckergerät in den Standbymodus umzuschalten.

Der Einschalter 57 ist an die Versorgungseinheit 58 angeschlossen, um eine Rückkehr der Steuereinheit 50 in den Betriebsmodus aus dem Standbymodus zu ermöglichen. Die Versorgungseinheit kann als integrierter Bestandteil der Steuereinheit 50 oder auch - in nicht gezeigter Weise - separat zur Steuereinheit 50 im elektronischen Gerät angeordnet werden. Es genügt ein kurzzeitiger Druck auf die Taste des Einschalters 57, um das Flip-Flop der Versorgungseinheit und somit ein elektronisches Gerät wieder in den Betriebmodus umzuschalten. Bei einer nächstfolgenden Betätigung des Tasters wird das Gerät durch den Mikrorechner wieder in den Standbymodus umgeschaltet. Damit keine unabsichtliche Berührung des Tasters bereits eine Umschaltung in den Standbymodus verursacht, ist vorgesehen, dass der Mikrorechner die Zeitdauer der ununterbrochenen Betätigung der Taste auswertet, wobei nur ein über die längere vorbestimmte zweite Zeitdauer ausgeübter Tastendruck eine Umschaltung des elektronischen Geräts in den Standbymodus bewirkt. Im Betriebsmodus der Frankiermaschine ermöglicht somit eine nur kurzzeitige Betätigung des Tasters dann keine Umschaltung in den Standbymodus.
Das elektronische Gerät ist ein Druckergerät, vorzugsweise eine Frankiermaschine. Die Steuereinheit 50 der Frankiermaschine ist mit weiteren Eingabemitteln, wie zum Beispiel mit Sensoren 21, 22, 23 verbunden. Es ist vorgesehen, dass die Steuereinheit 50 des Druckergeräts einen Mikrorechner 51 aufweist, der direkt oder indirekt via Ein-/Ausgabeeinheit 59 mit dem Sicherheitsmodul 52, mit einer Schnittstelleneinheit 53, direkt mit einem Display 54, mit einer SD-Card 55, mit einem nichtflüchtigen Speicher 56 und mit der Ein-/Ausgabeeinheit 59 betriebsmäßig verbunden ist.

Der Mikrorechner 51 enthält - in einer nicht gezeigten Weise - einen Display-Controller zur Ansteuerung des extern der Steuereinheit angeordneten Displays 54. Im vorliegenden Ausführungsbeispiel wird zur Anzeige und Eingabe ein Touch-Display eingesetzt, welches via einen Touch-Controller 54a an die Ein-/Ausgabeeinheit 59 angeschlossen ist. Der Mikrorechner 51 ist mit dem Touch-Controller 54a über einen seriellen Bus 54b, der durch die Ein-/Ausgabeeinheit 59 hindurchgeschleift wird, betriebsmäßig verbunden.

Die Steuereinheit 50 ist also zur Umschaltung in den Standbymodus aufgrund einer entsprechenden Benutzereingabe via Einschalter 57, Userinterface und/oder aufgrund eines Zeitablaufs programmiert.

Vor dem Umschalten vom Betriebsmodus in den Standbymodus steuert die Ein-/Ausgabeeinheit 59 über einen ersten Treiber 596 einen ersten Motor 61 zum Querverschieben des Druckwagens 24 an, falls der Druckkopf nicht bereits in die Dichtposition gelangt ist, wobei ein erster Sensor 21 an die Ein-/Ausgabeeinheit 59 angeschlossen ist, der das Erreichen einer Dichtposition durch den Druckwagen signalisiert. Zuletzt wird der erste Regler der Versorgungseinheit 58 gesteuert durch den Mikrorechner 51 über die Ein-/Ausgabeeinheit 59 abgeschaltet. Nach einem Betätigen des Tasters durch den Benutzer und im Ergebnis des Wiedereinschaltens der Stromversorgung über den ersten Regler der Versorgungseinheit 58 wird der Betriebsmodus erreicht.

Ein zweiter Sensor 22 ist an die Ein-/Ausgabeeinheit 59 angeschlossen und die Ein-/ Ausgabeeinheit 59 ist über einen zweiten Treiber 597 an einen zweiten Motor 71 angeschlossen ist. Nachdem die Steuereinheit 50 des Druckergeräts in den Betriebsmodus umgeschaltet ist, wird der zweite Motor 71 in einem Druckmodus zum Antrieb eines Transportbandes der Druckvorrichtung zum Bedrucken eines flachen Guts angesteuert, wenn der zweite Sensor 22 das Vorhandensein eines flachen Guts im Zuführpfad signalisiert.

Die Steuereinheit 50 kann mit mindestens einer Schnittstelleneinheit 53 ausgestattet werden, wobei letztere zur Datenübertragung, also nicht nur zum Empfangen sondern auch, Ausgabe und Weiterleitung von Nachrichten via ein Netzwerk an einen der Kommunikationsteilnehmer eines Systems dient. Eine Kommunikationseinheit bzw. ein Kommunikationsmodul zum Verarbeiten von Nachrichten ist im Mikrorechner integriert.

Die Ausgabemittel der elektronischen Steuereinheit sind ein Anzeige-Controller zur Anzeige via Display 54, eine Anzahl an ansteuerbaren Treibern 596, 597, 598 bzw. 599 für Motoren 61, 71, 81 bzw. einen Aktor 91, mindestens eine ansteuerbare Messanordnungen (Wandler) 593 und auch die mindestens eine Schnittstelleneinheit 53. Die mindestens eine Schnittstelleneinheit 53 und die Wandler 592, 593 sowie die Sensoren 21, 22, 23 fungieren zugleich auch als Eingabemittel.

Der Mikrorechner 51 ist mit der Schnittstelleneinheit 53 über serielle Datenleitungen 531 verbunden. Ein - nicht gezeigter - Controller kann ein Bestandteil der Schnittstelleneinheit 53 oder des Mikrorechners 51 sein, der dazu vorgesehen ist, um die Schnittstellendaten zu verarbeiten.

Die Kommunikationseinheit kann wie die Anzeigeeinheit auch als separate Baueinheit des druckenden Geräts realisiert werden.

Im vorstehend beschriebenen Ausführungsbeispiel ist der Mikrorechner 51 über die Ein-/Ausgabeeinheit 59 mit dem Sicherheitsmodul 52 verbunden. Alternativ kann der Mikrorechner 51 auch direkt mit dem Sicherheitsmodul 52 verbunden sein. Vorzugsweise kommen serielle Datenleitungen zum Einsatz um den Mikrorechner 51 und das Sicherheitsmodul 52 betriebsmäßig zu verbinden.

Bei einem Druckergerät, insbesondere einer Frankiermaschine, wird vor einem Umschalten in einen Standbymodus von der Steuereinheit ein erster Motor angesteuert und ein Druckkopfwagen via ein mit dem Motor gekoppeltes Antriebsmittel in eine Dichtposition verfahren, falls das noch nicht geschehen ist. Eine Reinigungs- und Dichtstation verhindert in der Dichtposition ein Austrocknen der Tintenstrahldruckköpfe. Ein erster Sensor 21 ist an einer ersten Position angeordnet, um in Abhängigkeit von der Stellung des Druckkopfwagens ein Signal an die Steuereinheit abzugeben, die ein Ausschaltsignal an den zweiten Eingang des Logikbausteins abgibt.

Der erste Sensor 21 ist beispielsweise als Durchlichtschranke realisiert. Die Unterbrechung eines von einer Lichtquelle D1, beispielsweise einer Leuchtdiode, ausgesendeten Lichtstahls der Durchlichtschranke verursacht an einem Lichtdetektor T2, beispielsweise einem pnp-Fototransistor, eine Signaländerung. Die Lichtquelle D1 ist zur Energieversorgung über einen Widerstand R1 und eine Leitung 19 an die Ein-/Ausgabeeinheit 59 angeschlossen. Der Lichtstrahl bzw. das verbleibende Restlicht kann zusätzlich - in nicht gezeigter Weise - durch eine Linse auf einen Lichtdetektor fokussiert werden. Letzterer gibt entsprechend der empfangenen Lichtstärke ein analoges Signal ab, welches über ein nichtlineares Bauelements in ein digitales Signal umgesetzt werden kann. Der erste Sensor 21 ist ausgansseitig über eine Leitung 211 an einen Pin P3 der Ein-/Ausgabeeinheit 59 angeschlossen. Es wurde gefunden, dass es ausreichend ist, wenn der Fototransistor als Negator geschaltet ist, der bei einer Unterschreitung eines einstellbaren Schwellwertes des analogen Signals ein digitales Signal (H-Pegel) über eine Leitung 211 an die Ein-/Ausgabe-Einheit 59 abgibt. Bei High-Pegel, also bei einem Signal mit dem digitalen Wert von "Eins" ist die Dichtposition erreicht. Der Mikrorechner 51 ist programmiert, an den Steuerausgang P2 der Ein-/Ausgabe-Einheit 59 ein Steuersignal mit dem digitalen Wert von "Eins" (High-Pegel) abzugeben, sobald ein Signal mit dem digitalen Wert von "Eins" vom ersten Sensor 21 abgegeben wird, wenn das Gerät in den Standbymodus umgeschaltet werden soll.

Erforderlichenfalls kann innerhalb des ersten Sensors 21 oder der Ein-/Ausgabeeinheit 59 zusätzlich ein an sich bekannter Schmidt-Trigger als Analog/Digital-Wandler realisiert werden.

Der erste Sensor 21 kann alternativ beispielsweise als Microschalter realisiert werden.

Eine andere alternative Lösungsvariante benötigt kein Signal von einem ersten Sensor sondern geht davon aus, dass ausgehend vom Umschalten in einen Standbymodus eine vorbestimmte erste Zeitdauer zum Verfahren des Druckkopfwagens bis in die Dichtposition benötigt wird. Als zusätzlicher Sicherheitsfaktor fungiert eine zweite konstante Zeitdauer. Der Mikrorechner der Steuereinheit erkennt, dass er in den Standbymodus umschalten soll und gibt ein um die vorgenannte erste Zeitdauer und die konstante Zeitdauer verzögertes Ausschaltsignal an den zweiten Eingang des Logikbausteins ab, was mit hoher Sicherheit erst dann zum Ausschalten des ersten Spannungsreglers führt, nachdem der Druckkopfwagen die Dichtposition erreicht hat.

Der Einschalter 57 ist an den - in der Figur 2 dargestellten - Logikbaustein der Stromversorgungseinheit 58 angeschlossen. Geeignet ist ein RS-Flip-Flop, um vor einer Umschaltung in den Betriebsmodus eine Wiedereinschaltung der Stromversorgung des Geräts auszulösen. Dem Kontaktpaar des Einschalters 57 ist ein Kontaktstück zugeordnet, welches durch eine Taste betätigbar ist. Der Einschalter ist somit als sogenannter Taster ausgebildet.

Das Kontaktstück kann nach einer alternativen Variante ein Bestandteil eines Mikroschalters sein.

Es ist vorgesehen, dass dem Schaltkontaktpaar 571, 572 des Einschalters 57 ein Kontaktstück 573 zugeordnet und dass der Einschalter als Taster ausgebildet ist oder dass das Kontaktstück ein Bestandteil eines Mikroschalters ist und das der Mikrorechner 51 im Betriebsmodus durch ein in einem Programmspeicher gespeichertes Programm programmiert ist, um das elektronische Gerät von einem Zustand in einen anderen Zustand umzuschalten bzw. um eine andere Eingabe oder eine Umschaltung in den Standbymodus aufgrund einer Betätigung des Tasters bzw. Mikroschalters vorzunehmen.

Die beiden Kontakte des Kontaktpaars können alternativ automatisch durch einen elektronischen Schalter miteinander elektrisch verbunden werden, um das elektronische Gerät von einem Zustand in einen anderen Zustand umzuschalten oder um eine andere Eingabe vorzunehmen. Der elektronische Schalter kann erforderlichenfalls auch von extern angesteuert werden.

Die beiden Kontakte des Schaltkontaktpaars des Einschalters 57 können miteinander elektrisch verbunden werden, um ein elektronisches Gerät, welches sich im Standbymodus befindet, über den Logikbaustein und unabhängig von einem im Programmspeicher 55 gespeicherten Programm von dem Standbymodus in den Betriebsmodus umzuschalten.

Die vorgenannte Schaltungsanordnung der Steuerung ermöglicht im Betriebsmodus in Verbindung mit dem im Programmspeicher gespeicherten Programm dass das elektronische Gerät von einem Zustand in einen anderen Zustand umgeschaltet, wobei durch das Verbinden der vorgenannten beiden Kontakte des Einschalters eine Eingabe im Betriebsmodus vorgenommen wird, wenn die Zeitdauer der Betätigung des Einschalters eine vorbestimmte erste Zeitdauer erreicht und eine zweite Zeitdauer unterschreitet, wobei die erste Zeitdauer kürzer als die zweite Zeitdauer ist.

Die Steuereinheit 50 ist somit aufgrund einer entsprechenden Benutzereingabe via Einschalter 57 und einem entsprechenden Programm zu einer Dateneingabe programmiert, wobei die Eingabe keine Umschaltung in den Standbymodus, sondern eine andere Funktion auslöst, wenn die Betätigungsdauer des Einschalters 57 eine erste vorbestimmte Zeitdauer nicht übersteigt. Dazu wird im Schirmbild des Displays ein Hinweis zur Betätigung des Einschalters 57 angezeigt, beispielsweise "once push the button for the picture the time before!", "two times push the button for a second picture!" oder "three times push the button for changing the input mode!". Damit kann beispielsweise die im Schirmbild präsentierte Darstellung in Form und/oder Inhalt gewechselt werden, ohne das die Touch-Funktion des Displays benutzt wird. Bei einer kurzzeitigen Betätigung des Tasters kann also der Mikrorechner die Eingabe in Abhängigkeit davon interpretieren, ob die Anzahl derjenigen Anzahl entspricht, die durch das vom Display angezeigte Schirmbild bzw. Menü vorgegeben wird. Bei Übereinstimmung wird eine bestimmte der jeweiligen Eingabe zugeordnete Funktion des Geräts ausgelöst.

Alternativ kann der Mikrorechner die Eingabe auch in Abhängigkeit davon interpretieren, ob die Anzahl derjenigen Anzahl entspricht, die durch das Handbuch vorgegeben wird, um eine vorbestimmte Funktion auszulösen.

Bei einer entsprechenden im Display dargestellten Auflistung, wobei der Anzahl von Tastendrücken ein Wert gegenübergestellt ist, kann man ebenso eine stufenartige Erhöhungen von Werteingaben durchzuführen, ohne dass dazu das Display berührt werden muß.

Die vorgenannte Schaltungsanordnung mit der Steuerung und dem ersten Sensor ermöglicht in Verbindung mit dem im Programmspeicher gespeicherten Programm das elektronische Gerät von einem Betriebsmodus in einen Standbymodus umzuschalten, wenn die Zeitdauer der Betätigung des Einschalters 57 die vorbestimmte zweite Zeitdauer erreicht oder übersteigt.

Die Versorgungseinheit 58 enthält gemäß Figur 2 einen Linearregler 582 als Quelle der Hilfsgleichspannung U2 für den Logikbaustein, der als Flip-Flop 583 ausgebildet ist.

Alternativ kann eine andere Bauart der Spannungsquelle vorgesehen werden, welche die Hilfsgleichspannung U2 erzeugt. Geeignet ist beispielsweise ein Spannungsteiler. Der Logikbaustein kann am Mittelabgriff des Spannungsteilers angeschlossen und damit mit einer Spannung versorgt werden, welche direkt aus der Ausgangsspannung des Schaltnetzteils abgeleitet wird.

Wenn auch im Ausführungsbeispiel anhand einer positiven Logik die Erfindung verdeutlicht wurde, soll aber dadurch eine Verwendung einer negativen Logik für eine andere Ausführungsform der ein- und ausschaltbaren Versorgungseinheit, der Sensoren und/oder der Steuereinheit bzw. eine gemischte Verwendung beider Logikarten nicht ausgeschlossen werden.

Der Mikrorechner 51 und die Ein-/Ausgabeeinheit 59 können alternativ zur Realisierung als Prozessormodul auch als separate Baueinheiten auf dem Mainboard angeordnet sein.

Die Erfindung ist nicht auf die vorliegend erläuterten Ausführungsformen beschränkt, da offensichtlich weitere andere Ausführungen der Erfindung entwickelt bzw. eingesetzt werden könnten, die von den anliegenden Schutzansprüchen umfasst werden.

## Patentansprüche

1. An eine Steuereinheit angeschlossene ein- und ausschaltbare Versorgungseinheit (58) für ein elektronisches Gerät (1), welches ein Netzteil aufweist, wobei die Versorgungseinheit (58) einen ersten Spannungsregler (581) und eine Spannungsquelle (582) aufweist, welche eingangsseitig mit dem Gleichspannungsausgang des Netzteils verbunden sind, **dadurch gekennzeichnet, dass** die Versorgungseinheit einen Logikbaustein (583) aufweist, welcher durch die Spannungsquelle (582) mit einer geeigneten Hilfsgleichspannung versorgt wird, dass der erste Spannungsregler einen Enable-Eingang (EN) hat, der mit dem Ausgang des Logikbausteins (583) verbunden ist und über letzteren gesteuert ein- bzw. ausgeschaltet werden kann, wobei ein Schaltkontaktpaar (571, 572) vorgesehen ist, deren Kontakte zum Umschalten des Logikbausteins elektrisch miteinander verbunden werden, dass ein erster Kontakt (571) des Schaltkontaktpaars an der Hilfsgleichspannung des Logikbausteins angeschlossen und ein zweiter Kontakt (572) des Schaltkontaktpaars einerseits an einem Eingang (A) des Logikbausteins und andererseits über den Steuerausgang (586) der Versorgungseinheit (58) an einem Eingang (P1) eines Mikrorechners (51) einer Steuereinheit (50) angeschlossen ist, dass der Mikrorechner (51) im Betriebmodus durch ein in einem Programmspeicher gespeichertes Programm programmiert ist, um die Anzahl und Dauer des Verbindens des Kontaktpaars (571, 572) festzustellen und auszuwerten, wobei im Ergebnis eine Eingabe von Informationen aufgrund einer Benutzer-Eingabe in das Gerät (1) oder eine Umschaltung zwischen Zuständen des Geräts (1) vorgenommen wird, wobei in Abhängigkeit von der Auswertung der Eingabe im Mikrorechner (51) ein digitales Signal an einen Steuerausgang (P2) zur Umschaltung vom Betriebsmodus in einen Standbymodus abgegeben wird und dass an den Steuerausgang (P2) über einen Steuereingang (585) der Versorgungseinheit (58) ein zweiter Eingang (B) des Logikbausteins (583) angeschlossen ist.

2. Ein- und ausschaltbare Versorgungseinheit, nach Anspruch 1, **dadurch gekennzeichnet, dass** dem Schaltkontaktpaar (571, 572) eines Einschalters (57) ein Kontaktstück (573) zugeordnet und dass der Einschalter als Taster ausgebildet ist oder dass das Kontaktstück ein Bestandteil eines Mikroschalters ist und das der Mikrorechner (51) im Betriebmodus durch ein in einem Programmspeicher gespeichertes Programm programmiert ist, um das elektronische Gerät von einem Zustand in einen anderen Zustand umzuschalten bzw. um eine Eingabe von Informationen oder eine Umschaltung in den Standbymodus aufgrund einer Betätigung des Tasters bzw. Mikroschalters vorzunehmen.

3. Ein- und ausschaltbare Versorgungseinheit, nach Anspruch 1, **dadurch gekennzeichnet, dass** der Logikbaustein (583) eine Anzahl an Negatoren aufweist, wobei der Eingang eines ersten Negators (N1) den ersten Eingang (A) des Logikbausteins (583) bildet, wobei ein zweiter Negator (N2) und ein dritter Negator (N3) zu einem Flip-Flop verschaltet sind, wobei der Eingang des zweiten Negators (N2) einerseits mit dem Ausgang des ersten Negators (N1) und anderseits über eine Reihen-schaltung einer Diode (D) und eines ohmschen Widerstandes (R2) mit dem zweiten Eingang (B) des Logikbausteins (583) verbunden ist, wobei der erste Negator (N1) aus einem ersten Transistor (T1) besteht, dessen Emitter an Masse angeschlossen ist, und dass ein ohmscher Widerstandes (R4) zwischen dem Kollektor des ersten Transistors (T1) und dem Ausgang des dritten Negators (N3) geschaltet ist sowie dass die Steuereinheit (50) zur Umschaltung in den Standbymodus aufgrund eines Zeitablauf oder einer Betätigung des Tasters programmiert ist und ein digitales Signal über den Steuerausgang (P2) an den zweiten Eingang (B) des Logikbausteins (583) abgegeben wird.

4. Ein- und ausschaltbare Versorgungseinheit, nach den Ansprüchen 1 und 3, **dadurch gekennzeichnet, dass** am Ausgang des dritten Negators ein Eingang eines vierten Negators angeschlossen ist, wobei der Ausgang des vierten Negators den Ausgang des Logikbausteins (583) bildet.

5. Ein- und ausschaltbare Versorgungseinheit, nach Anspruch 1, **dadurch gekennzeichnet, dass** die beiden Kontakte des Kontaktpaars automatisch durch einen elektronischen Schalter miteinander elektrisch verbunden werden, um das elektronische Gerät von einem Zustand in einen anderen Zustand umzuschalten oder um eine andere Eingabe vorzunehmen.

6. Ein- und ausschaltbare Versorgungseinheit, nach Anspruch 1, **dadurch gekennzeichnet, dass** die Hilfsgleichspannung aus der Ausgangsgleichspannung eines internen Netzteils (60) in bekannter Weise abgeleitet wird.

7. Ein- und ausschaltbare Versorgungseinheit, nach Anspruch 1, **dadurch gekennzeichnet, dass** der Mikrorechner (51) der Steuereinheit (50) des Geräts (1) mit einem Display (54), mit einer SD-Card (55) als Programmspeicher, mit einem nichtflüchtigen Speicher (56) und mit einer Ein-/Ausgabeeinheit (59) betriebsmäßig verbunden ist, dass das Display (54) via Touch-Controller (54a) an die Ein-/Ausgabeeinheit (59) angeschlossen ist und die Steuereinheit (50) zur Umschaltung in den Standbymodus aufgrund einer entsprechenden Benutzereingabe via eine Taste am Einschalter (57) oder ein anderers geeignetes Betätigungsmittel oder ein Betätigungsfeld des Userinterfaces und/oder durch Zeitablauf programmiert ist, dass die Ein-/Ausgabeeinheit (59) über einen ersten Treiber (596) mit einem ersten Motor (61) verbunden ist, um letzteren zum Querverschieben des Druckwagens (24) anzusteuern, bevor die Steuereinheit (50) des Druckergeräts in den Standbymodus umgeschaltet ist und dass ein erster Sensor (21) ausgangsseitig über eine Leitung (211) an einen Pin (P3) der Ein-/Ausgabeeinheit (59) angeschlossen ist, der das Erreichen einer Dichtposition durch den Druckwagen (24) durch Abgabe eines Signals mit dem digitalen Wert von "Eins" signalisiert, dass der Mikrorechner (51) programmiert ist, an den Steuerausgang (P2) der Ein-/Ausgabe-Einheit (59) ein Steuersignal abzugeben, sobald ein Signal mit dem digitalen Wert von "Eins" von einem ersten Sensor (21) abgegeben wird, wenn das Gerät in den Standbymodus umgeschaltet werden soll.

8. Ein- und ausschaltbare Versorgungseinheit, nach Anspruch 7, **dadurch gekennzeichnet, dass** der erste Sensor (21) eine Durchlichtschranke oder ein Mikroschalter ist und dass ein zweiter Sensor (22) an die Ein-/Ausgabeeinheit (59) angeschlossen ist, dass die Ein-/Ausgabeeinheit (59) über einen zweiten Treiber (597) an einen zweiten Motor (71) angeschlossen ist und letzteren zum Antrieb eines Transportbandes (2) der Druckvorrichtung zum Bedrucken eines flachen Guts (P) ansteuert, wenn die Steuereinheit (50) des Druckergeräts in den Betriebsmodus umgeschaltet ist und wenn der zweite Sensor (22) das Vorhandensein eines flachen Guts (P) signalisiert.

9. Ein- und ausschaltbare Versorgungseinheit, nach den Ansprüchen 1 und 7, **dadurch gekennzeichnet, dass** der Mikrorechner (51) über die Ein-/Ausgabeeinheit (59) oder direkt mit einem Sicherheitsmodul (52) betriebsmäßig verbunden ist.

10. Ein- und ausschaltbare Versorgungseinheit, nach Anspruch 7, **dadurch gekennzeichnet, dass** als nicht-flüchtiger Speicher (56) ein SPI-FLASH eingesetzt wird, das mit dem Mikrorechner (51) über eine serielle Datenleitung (561) verbunden ist.

11. Ein- und ausschaltbare Versorgungseinheit, nach Anspruch 1, **dadurch gekennzeichnet, dass** der Mikrorechner (51) mit einer Schnittstelleneinheit (53) über eine serielle Datenleitung (531) und mit der Ein-/Ausgabeeinheit (59) über einen internen BUS (201) verbunden ist.

12. Ein- und ausschaltbare Versorgungseinheit, nach Anspruch 1, **dadurch gekennzeichnet, dass** ein frei programmierbares Gate Array (FPGA) als Ein/Ausgabeeinheit (59) programmiert ist.

13. Ein- und ausschaltbare Versorgungseinheit, nach Anspruch 1, **dadurch gekennzeichnet, dass** die als Programmspeicher eingesetzte SD-Card (55) über serielle Datenleitungen (551) mit dem Mikrorechner (51) betriebsmäßig verbunden ist.

14. Ein- und ausschaltbare Versorgungseinheit, nach Anspruch 1, **dadurch gekennzeichnet, dass** ein Einschalter (57) an die Stromversorgungseinheit (58) angeschlossen ist, um vor einer Umschaltung vom Standbymodus in den Betriebsmodus über den Logikbaustein (583) und den ersten Spannungsregler (581) eine Wiedereinschaltung der Stromversorgung des Geräts auszulösen.

## Claims

1. An activatable and deactivatable supply unit (58) connected with a control unit for an electronic apparatus (1) having a power supply unit, wherein said supply unit (58) has a first voltage controller (581) and a voltage source (582) that are connected on the input side with the DC voltage output of the power supply unit, **characterized in that** the supply unit has a logic module (583) which is supplied with a suitable auxiliary DC voltage by the voltage source (582), that the first voltage controller has an enable input (EN) that is connected with the output of the logic module (583) and can be activated and deactivated, respectively, controlled by the latter, wherein a pair of switching contacts (571, 572) is provided the contacts of which are electrically connected with each other for switching over the logic module, that a first contact (571) of said pair of switching contacts is connected with the auxiliary DV voltage of the logic module and that a second contact (572) of the pair of switching contacts is connected, on the one hand, with an input (A) of the logic module and, on the other hand, via the control output (586) of the supply unit (58) with an input (P1) of a microcomputer (51) of a control unit (50), that the microcomputer (51), in the operating mode, is programmed by a program stored in a program memory to detect and analyse the number and duration of the connecting of the pair of contacts (571, 572), wherein, as a result, there is made an input of information due to a user input into the apparatus (1) or a switching-over between the states of the apparatus (1), wherein, depending on the analysis of the input in the microcomputer (51), a digital signal for switching over from the operating mode to a standby mode is given to a control output (P2), and that a second input (B) of the logic module (583) is connected with the control output (P2) via a control input (585) of the supply unit (58).

2. An activatable and deactivatable supply unit according to Claim 1, **characterized in that** a contact piece (573) is assigned to the pair of switching contacts (571, 572) of a closing switch (57) and that the closing switch is designed as a push-button or that the contact piece is a component of a micro switch, and that the microcomputer (51), in operating mode, is programmed by a program stored in a program memory to switch the electronic apparatus over from one state to another state or to make an input of information or a switching-over into the standby-mode due to an operation of the push-button or micro switch.

3. An activatable and deactivatable supply unit according to Claim 1, **characterized in that** the logic module (583) has a number of negators, wherein the input of a first negator (N1) forms the first input (A) of the logic module (583), wherein a second negator (N2) and a third negator (N3) are connected to form a flip-flop, wherein the input of the second negator (N2) is connected, on the one hand, with the output of the first negator (N1) and, on the other hand, via serial connection of a diode (D) and an Ohmic resistor (R2), with the second input (B) of the logic module (583), wherein the first negator (N1) consists of a first transistor (T1) the emitter of which is connected to mass, and that an Ohmic resistor (R4) is connected between the collector of the first transistor (T1) and the output of the third negator (N3), as well as that the control unit (50) is programmed to switch over into the standby mode due to a lapse of time or an operation of the push-button, and that a digital signal is given via the control output (P2) to the second input (B) of the logic module (583).

4. An activatable and deactivatable supply unit according to Claims 1 and 3, **characterized in that** an input of a fourth negator is connected with the output of a third negator, the output of the fourth negator forming the output of the logic module (583).

5. An activatable and deactivatable supply unit according to Claim 1, **characterized in that** the two contacts of the pair of contacts are automatically electrically connected with each other by an electronic switch in order to switch the electronic apparatus over from one state to another state or to make another input.

6. An activatable and deactivatable supply unit according to Claim 1, **characterized in that** the auxiliary DC voltage is derived in a known manner from the output DC voltage of an internal power supply unit (60).

7. An activatable and deactivatable supply unit according to Claim 1, **characterized in that** the microcomputer (51) of the control unit (50) of the appliance (1) is in an operating connection with a display (54), with an SD card (55) as program memory, with a non-volatile memory (56), and with an input/output unit (59), that the display (54) is connected via touch controller (54a) with the input/output unit (59), and that the control unit (50) is programmed to switch over into the standby mode due to a respective user input via a push-button of the closing switch (57) or another suitable operating means or an operating field of the user interface and/or due to a lapse of time, that the input/output unit (59) is connected via a first driver (596) with a first motor (61) for triggering the latter to cause a transverse movement of the printer carriage (24) before the control unit (50) of the printer device is switched-over into the standby mode, and that a first sensor (21) is connected on the output side via a line (211) with a pin (P3) of the input/output unit (59) that signals the reaching of a sealing position by the printer carriage (24) by emitting a signal with the digital value "one", that the microcomputer (51) is programmed to send a control signal to the control output (P2) of the input/output unit (59) as soon as a signal with the digital value "one" is given by a first sensor (21) when the appliance shall be switched over into the standby mode.

8. An activatable and deactivatable supply unit according to Claim 7, **characterized in that** the first sensor (21) is a transmitted-light barrier or a micro switch and that a second sensor (22) is connected with the input/output unit (59), that the input/output unit (59) is connected, via a second driver (597), with a second motor (71) and triggers the latter to drive a transport belt (2) of the printer device for printing on a flat item (P) when the control unit (50) of the printer device has been switched-over into the operating mode and when the second sensor (22) signals the presence of a flat item (P).

9. An activatable and deactivatable supply unit according to Claims 1 and 7, **characterized in that** the microcomputer (51) is in an operating connection via the input/output unit (59) or directly with a security module (52).

10. An activatable and deactivatable supply unit according to Claim 7, **characterized in that**, as non-volatile memory (56), there is used a SPI-FLASH that is connected with the microcomputer (51) via a serial data line (561).

11. An activatable and deactivatable supply unit according to Claim 1, **characterized in that** the microcomputer (51) is connected with an interface unit (53) via a serial data line (531) and with the input/output unit (59) via an internal BUS (201).

12. An activatable and deactivatable supply unit according to Claim 1, **characterized in that** a freely programmable gate array (FPGA) is programmed as input/output unit (59).

13. An activatable and deactivatable supply unit according to Claim 1, **characterized in that** the SD card (55) used as program memory is in an operating connection with the microcomputer (51) via serial data lines (551).

14. An activatable and deactivatable supply unit according to Claim 1, **characterized in that** a closing switch (57) is connected with the power supply unit (58) in order to cause that, before a switching-over from the standby mode into the operating mode, the power supply of the appliance is switched on again via the logic module (583) and the first voltage controller (581).

## Revendications

1. Unité d'alimentation pouvant être mise en marche et arrêtée (58), connectée à une unité de commande et destinée à un appareil électronique (1) qui comporte un bloc d'alimentation, l'unité d'alimentation (58) comportant un premier régulateur de tension (581) et une source de tension (582) qui sont connectés par leurs entrées à la sortie de tension continue du bloc d'alimentation, **caractérisée en ce, que** l'unité d'alimentation comporte un module logique (583), qui est alimenté via la source de tension (582) par une tension continue auxiliaire appropriée, que le premier régulateur de tension comporte une entrée ENABLE (validation) qui est connectée à la sortie du module logique (583) et qui peut être commandée ou encore être activée ou désactivée par ce dernier, une paire de contacts de commutation (571, 572) étant prévue pour commuter le module logique par connexion électrique des contacts, qu'un premier contact (571) de la paire de contacts de commutation soit connecté à la tension continue auxiliaire du module logique et qu'un deuxième contact (572) de la paire de contacts de commutation soit connecté, d'une part, à une entrée (A) du module logique et, d'autre part, à une entrée (P1) d'un micro-ordinateur (51) d'une unité de commande (50) via la sortie de commande (586) de l'unité d'alimentation (58), que le micro-ordinateur (51) soit programmé en mode opérationnel par un programme enregistré dans une mémoire de programme pour déterminer et évaluer le nombre et la durée de la connexion de la paire de contacts (571, 572), le résultat impliquant l'exécution d'une entrée d'informations à la suite d'une entrée dans l'appareil (1) par un utilisateur ou d'une commutation entre des états de l'appareil (1), et dont, en dépendance de l'évaluation de l'entrée dans le micro-ordinateur (51), un signal numérique soit transmis à une sortie de commande (P2) pour commuter du mode opérationnel sur un mode de veille et que soit connectée une deuxième entrée (B) du module logique (583) à la sortie de commande (P2) via une entrée de commande (585) de l'unité d'alimentation (58).

2. Unité d'alimentation pouvant être mise en marche et arrêtée, selon la revendication 1, **caractérisée en ce, qu'**une pièce de contact (573) soit affectée à la paire de contacts de commutation (571, 572) d'un contacteur (57) et que le contacteur soit formé par un bouton ou que la pièce de contact soit un composant d'un microrupteur et que le micro-ordinateur (51) en mode opérationnel soit programmé par un programme enregistré dans une mémoire de programme, pour commuter l'appareil électronique d'un état dans un autre ou bien pour exécuter une entrée d'informations ou une commutation en mode veille à la suite de l'actionnement du bouton ou bien du microrupteur.

3. Unité d'alimentation pouvant être mise en marche et arrêtée, selon la revendication 1, **caractérisée en ce, que** le module logique (583) comporte un nombre d'inverseurs, l'entrée d'un premier inverseur (N1) formant la première entrée (A) du module logique (583), un deuxième inverseur (N2) et un troisième inverseur (N3) étant branchés pour former une bascule, l'entrée du deuxième inverseur (N2) étant connectée, d'une part, à la sortie du premier inverseur (N1) et, d'autre part, à la seconde entrée (B) du module logique (583) via un montage en série d'une diode (D) et d'une résistance ohmique (R2), le premier inverseur (N1) étant composé d'un premier transistor (T1) dont l'émetteur est raccordé à la masse, et qu'une résistance ohmique (R4) soit branchée entre le collecteur du premier transistor (T1) et la sortie du troisième inverseur (N3) ainsi que, que l'unité de commande (50) soit programmée pour commuter en mode de veille à la suite d'un écoulement de temps ou d'un actionnement du bouton et qu'un signal numérique soit transmis à la deuxième entrée (B) du module logique (583) via la sortie de commande (P2).

4. Unité d'alimentation pouvant être mise en marche et arrêtée, selon les revendications 1 et 3, **caractérisée en ce, qu'**une entrée d'un quatrième inverseur soit connectée à la sortie du troisième inverseur, la sortie du quatrième inverseur formant la sortie du module logique (583).

5. Unité d'alimentation pouvant être mise en marche et arrêtée, selon la revendication 1, **caractérisée en ce, que** les deux contacts de la paire de contacts soient automatiquement connectés ensemble électriquement par un commutateur électronique, pour commuter l'appareil électronique d'un état dans un autre état ou pour opérer une autre entrée.

6. Unité d'alimentation pouvant être mise en marche et arrêtée, selon la revendication 1, **caractérisée en ce, que** la tension continue auxiliaire soit dérivée de manière connue de la tension continue de sortie d'un bloc d'alimentation (60) interne.

7. Unité d'alimentation pouvant être mise en marche et arrêtée, selon la revendication 1, **caractérisée en ce, que** le micro-ordinateur (51) de l'unité de commande (50) de l'appareil (1) soit connecté en mode opérationnel avec un écran (54), une carte SD (55) en tant que mémoire de programme, une mémoire non volatile (56) et une unité d'entrée et de sortie (59), que l'écran (54) soit connecté via un contrôleur tactile (54a) à l'unité d'entrée et de sortie (59) et que l'unité de commande (50) soit programmée pour commuter en mode veille à la suite d'une entrée correspondante d'utilisateur via un bouton au contacteur (57) ou par un autre moyen d'actionnement approprié ou par un champ d'activation de l'interface utilisateur et/ou par un écoulement de temps, que l'unité d'entrée et de sortie (59) soit connectée via un premier pilote (596) à un premier moteur (61) pour commander ce dernier pour qu'il déplace transversalement le chariot d'impression (24) avant que l'unité de commande (50) de l'appareil d'impression soit commutée en mode veille et qu'un premier capteur (21) soit connecté côté sortie via une ligne (211) à une broche (P3) de l'unité d'entrée et de sortie (59), ledit capteur signalant l'atteinte d'une position d'étanchéité par le chariot d'impression (24) par l'émission d'un signal de valeur numérique « un », que le micro-ordinateur (51) soit programmé pour transmettre un signal de commande à la sortie de commande (P2) de l'unité d'entrée et de sortie (59), dès qu'un signal de valeur numérique « un » est émis par un premier capteur (21), si l'appareil doit être commuté en mode veille.

8. Unité d'alimentation pouvant être mise en marche et arrêtée, selon la revendication 7, **caractérisée en ce, que** le premier capteur (21) soit une barrière lumineuse ou un microrupteur et qu'un deuxième capteur (22) soit connecté à l'unité d'entrée et de sortie (59), que l'unité d'entrée et de sortie (59) soit connectée via un deuxième pilote (597) à un deuxième moteur (71) et qu'elle commande ce dernier pour l'entraînement d'une bande transporteuse (2) du dispositif d'impression pour imprimer un article plat (P), si l'unité de commande (50) de l'appareil d'impression est commutée en mode opérationnel et si le deuxième capteur (22) signale la présence d'un article plat (P).

9. Unité d'alimentation pouvant être mise en marche et arrêtée, selon les revendications 1 et 7, **caractérisée en ce, que** le micro-ordinateur (51) soit connecté en mode opérationnel via l'unité d'entrée et de sortie (59) ou directement à un module de sécurité (52).

10. Unité d'alimentation pouvant être mise en marche et arrêtée, selon la revendication 7, **caractérisée en ce, que** soit utilisée en tant que mémoire non volatile (56) une mémoire FLASH SPI, qui soit connectée au micro-ordinateur (51) via une ligne sérielle de transmission des données (561).

11. Unité d'alimentation pouvant être mise en marche et arrêtée, selon la revendication 1, **caractérisée en ce, que** le micro-ordinateur (51) soit connecté à une unité d'interface (53) via une ligne de transmission des données sérielle (531) et à l'unité d'entrée et de sortie (59) via un BUS interne (201).

12. Unité d'alimentation pouvant être mise en marche et arrêtée, selon la revendication 1, **caractérisée en ce, qu'**un circuit logique programmable (FPGA - field-programmable gate array) soit programmé en tant qu'unité d'entrée et de sortie (59).

13. Unité d'alimentation pouvant être mise en marche et arrêtée, selon la revendication 1, **caractérisée en ce, que** la carte SD (55) utilisée comme mémoire de programme soit connectée en mode opérationnel au micro-ordinateur (51) via des lignes sérielles de transmission de données (551).

14. Unité d'alimentation pouvant être mise en marche et arrêtée, selon la revendication 1, **caractérisée en ce, qu'**un contacteur (57) soit connecté à l'unité d'alimentation électrique (58), afin de déclencher, avant une commutation du mode veille en mode opérationnel, un réarmement de l'alimentation électrique de l'appareil via le module logique (583) et le premier régulateur de tension (581).
